# EUROPEAN PATENT SPECIFICATION

(11) **EP 0 888 048 B1**
(45) Date of publication and mention of the grant of the patent: **26.09.2001**
(21) Application number: 97907192.5
(22) Date of filing: 12.03.1997
(51) Int. Cl.: A01N 25/26, A01N 25/00

(54) **PESTICIDAL OR HERBICIDAL COMPOSITIONS**
PESTIZIDE ODER HERBIZIDE ZUSAMMENSETZUNGEN
COMPOSITIONS PESTICIDES OU HERBICIDES

(30) Priority: 12.03.1996 GB 9605203
(43) Date of publication of application: 07.01.1999
(73) Proprietor: THE UNIVERSITY OF SOUTHAMPTON, Southampton S017 1BJ (GB)
(72) Inventor: HOWSE, Philip Edwin, 14 Western Way Alverstoke, Hampshire PO12 2NG (GB)
(74) Representative: Dickson, Elizabeth Anne
(86) International application number: PCT/GB97/00683
(87) International publication number: WO 97/33472

(56) References cited:
- EP-A- 0 018 119
- EP-A- 0 529 975
- WO-A-83/00799
- WO-A-94/00980
- WO-A-97/07676
- GB-A- 2 127 690
- US-A- 5 358 863
- PATENT ABSTRACTS OF JAPAN, vol. 15, no. 60(C-805); & JP,A,02288803 (Nissan Chem Ind Ltd), 28-11-1990

## Description

The present invention relates to pesticidal or herbicidal compositions.

The most common domestic insect pests are houseflies, mosquitoes and cockroaches.

The common housefly, *Musca domestica*, occurs throughout the world in domestic situations. Along with similar species, such as, the lesser housefly, blowflies and flesh flies, it contaminates food and spreads diseases, such as, typhoid and cholera, and also carries the eggs of parasitic worms.

The housefly is also a problem on refuse tips and is becoming a progressively greater nuisance in agriculture, where it breeds in deep litter breeding units for poultry and other animals.

The cockroach is ubiquitous in urban situations in the tropics and sub-tropics and is common in heated buildings in Britain, the rest of Europe and North America where food is prepared. Large cockroach populations are found in sewers and drains and many disease organisms have been isolated from them.

The mosquito is both a severe nuisance pest and vastly important as a vector for blood-borne diseases, such as, malaria, yellow fever, dengue and the like.

Control of those insect pests is becoming more urgent as human populations increase and provide more resources for them to breed.

International Patent Application No. WO94/00980 described the ability of electrostatically charged powders to adhere to an insect cuticle, to a surface of a plant or to a surface of an insect trap. However, insecticidal powders, for example magnesium silicate or silica particles impregnated with an insecticide, do not have the necessary characteristics either to be electrostatically charged or to retain such an electrostatic charge and therefore the particles do not become attached firmly to an insect cuticle, to the surface of a plant, or to a surface of an insect trap.

We have now developed pesticidal compositions which are in particulate form and which have improved adherent properties so that they adhere more firmly to the insect, plant or surface onto which they are sprayed or dusted.

Accordingly, the present invention provides a pesticidal composition in particulate form which comprises composite particles having an average particle size in the range of from 1 to 100*µ*m, each particle comprising a core of an inert substrate having a first pesticide associated therewith, a coating of an electrically resistive material around the said core and a second pesticide adhered to the coating of the electrically resistive material, the particles carrying an electrostatic charge.

By the term "pesticide" as used herein is meant any substance which can be used in the control of agricultural, natural environment and domestic pests, such as insects. Included within this term, therefore, are naturally occurring or synthetic chemical insecticides, fungicides, acaricides insect growth regulators and chemosterilants; entomopathogens such as bacteria, viruses and fungi; parasites; and behaviour modifying chemicals such as pheromones, allomones and kairmones.

The compositions of the present invention comprise a core of an inert substrate, i.e. a material which acts merely as a carrier for the pesticide and which is chemically and biologically inert. The inert substrate is preferably porous and highly absorbent. Suitable examples of such materials are silicon dioxide, magnesium silicate (talc), diatomaceous earth, cellulose or natural or synthetic polymers such as chitin, chitosan or rubber. The inert substrate may have the pesticide associated with it by impregnation into it, or may have the pesticide associated with it in some other way for example by adsorption or absorption thereon.

The cores of the composite particles are coated with a coating of an electrically resistive material, i.e. a material which readily accepts an electrical charge, such as a wax, a lipid, a natural or synthetic resin or a natural or synthetic polymeric material. Examples of waxes which may be used are Carnauba Wax, paraffin waxes, candelilla wax and bees' wax. Examples of polymeric coating materials are polytetrafluoroethylene, or ethylenic polymers. Examples of resins are shellac and synthetic acrylic resins. An example of a lipid which may be used is lecithin.

The composite particles of the present invention have a particle size in the range of from 1 to 100µm, preferably 20 to 60µm. If the particles are too small then they become hazardous to human health, whilst if they are too large they will then tend to fall off the insect, plant or other surface to which they are applied either because of gravitional forces and/or because there will be insufficient electrostatic attraction. The thickness of the coating of the electrically resistive material is not critical, provided that it surrounds the core of the particles and can readily accept an electric charge. Generally, the coating material will comprise at least 0.1% by volume, preferably 5 to 25% by volume of the particles and the core will comprise up to 99.9% by volume, preferably 75 to 95% by volume of the particles.

The coating of electrically resistive material may be applied to the cores of the particles by any suitable coating technique such as by fluidised bed coating, spraying or mixing.

The amount of pesticide which is impregnated into or associated with the inert substrate will generally comprise at least 0.1% by weight of the inert substrate. The amount of the pesticide will depend upon the intended release rate from the composition and the length of intended duration of release. It will also depend upon the nature of the electrically resistive coating and other factors.

It is known that insects carry an electrostatic charge. In the case of the cockroach, the outside of its cuticle is positively charged, with an electrostatic gradient across the cuticle (Beament, J.W.L. in *Nature Lond.* Vol. 191, 1961, pp 217-221).

Accordingly, it is preferred if the particles of the compositions of the invention are electrostatically charged to have an opposite polarity to that of the pest against which they are targeted. In this manner, the adhesion of the charged particles to the pest is improved.

The pesticide which is used in the present invention may be specifically targeted to the control of particular pests. For example, an insecticide may be applied to sexually mature male insects so that it spreads among the rest of the population during mating or by contact during swarming. The insecticide is unlikely to spread to other species of insect when transmitted in this way.

Each pesticide may be chosen to have a narrow spectrum of action. Entomopathogens are particularly well suited to this. A further embodiment is to use as the pesticide a specific attractant to attract insects to the composition. For example, the attractant may be a sexual pheromone. Furthermore, a sexual attractant pheromone may be used to produce male confusion. This technique depends on the very high sensitivity of male insects to volatile sex attractants produced by females of the same species. (In a few cases the male produces the attractant). The female pheromone affects the male guidance system which depends on flying upwind in an odour laden air current, thereby disrupting mating by preventing the males from locating the females.

Alternatively, a surface on which the insects may land is coated with electrostatically charged particles containing a volatile pheromone. The particles are then picked up by the insect from the surface. The particles picked up in this way are then transferred to the antennae or other parts of the insect bodies either by exploratory movement or during cleaning. The particles remain in place and continue to release pheromone, the coating on the particle ensuring good attachment and controlling the release rate. Due to habituation or saturation of the antenna receptors by the pheromone emission, the insects are unable to orientate with respect to trace emissions of pheromone from female insects in the air. Mating fails to occur and eggs laid by the females are infertile. Furthermore, the males themselves act as female mimics, diverting uncontaminated males away from calling females.

In a particular embodiment of the invention the electrically resistive coating is smooth. The smoothness of the coating will depend upon the nature of the coating material and the coating technique used. Accordingly, insects or mites which contact the smooth coating on charged particles get the particles onto their feet and the smooth surface of the particles reduces friction and prevents them gripping satisfactorily onto a surface on which they are crawling. For example, honey bee mites (*Varroa*) are prevented in this manner from crawling up the walls of the beehive and attaching to bees. They thus fall to the bottom of the hive and then are killed by an acaricide contained within the particles, by techniques known in the art.

In accordance with the present invention, a second pesticide is adhered to the coating of the electrically resistive material, i.e. on the outer surface of the composite particles.

Particles which have two pesticides associated therewith may have two possible modes of action on the same species of insect. For example, the pesticide impregnated into or associated with the inert substrate may be a bacillus which is toxic to the insect on ingestion. The second pesticide may be a fungus which is toxic by invasion through the outer cuticle of the insect.

The number of pesticides incorporated into a single particle may be regulated in order to achieve a desired range of target specificity, or particles having different constituents may be mixed to achieve the same end.

In situations where particular insect pests or fungal pests attack a crop, a suitable pesticide for the insect or fungi may be incorporated into the particles and the crop plants sprayed or dusted with the composition. The insects or fungal spores thus come into contact with the particles which adhere to them and the pesticide is released from the particles of the composition to kill the insects or fungal spores.

Charging of the particles may be achieved by friction or by subjecting them to electrical discharge, high electrical fields or other suitable means. Where the particles are applied directly to the pest, plant or surface for instance, by a dispenser, such as, an aerosol spray dispenser, frictional charging may be effected by suitable design of the dispenser, particularly the nozzle configuration thereof.

The particles of the present invention will preferably retain their electrostatic charge for at least 24 hours when they contain slow acting chemical pesticides, such as chemical insecticides and for at least 4 to 5 days when they contain biological pesticides.

The present invention will be further described with reference to the accompanying drawings, in which:

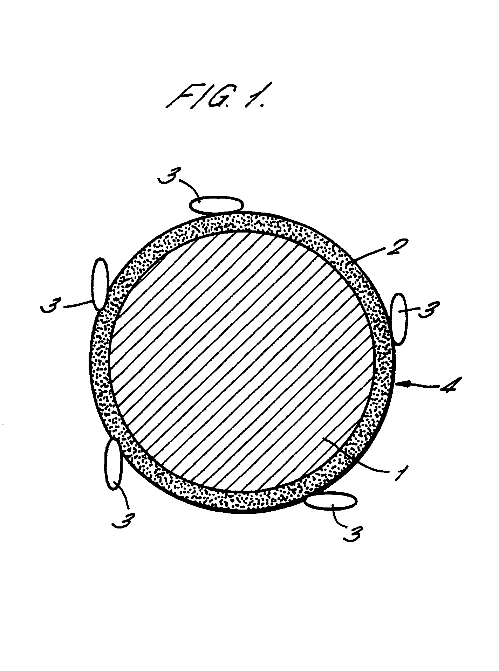

Figure 1 illustrates a particle of a control agent in accordance with the invention.

Referring to Figure 1, the particle 4 comprises a highly absorbent or porous core 1 surrounded by an electrically resistive coating 2. The core 1 is impregnated with a pesticide, for example a biological insecticide such as *Metarhizium anisopliae.* The electrically resistive lipid coating may be, for example, Carnauba Wax.

As illustrated in Figure 1, the particle 4 has a further pesticide 3 applied to the outer surface of the coating 2. The further pesticide may comprise fungal spores. A plurality of particles as shown in Figure 1 may be charged by corona discharge techniques.

The present invention will be further described with reference to the following Examples.

### EXAMPLE 1

Silicon dioxide particles 0.5 to 10µm in diameter, (Sigma Chemical Co.), 10g, were mixed with 10g of the insecticide Sulfluramid (Trade Name - Griffin Corporation). Composite impregnated silicon dioxide particles were thus formed which were then throughly mixed with 80g Carnauba wax particles of from 20 to 80µm in diameter. The silica particles, which are known to occlude lipid materials acquired a coating of lipid molecules from the wax particles. Carnauba wax is a highly electrically resistive material. Accordingly, the addition of the wax to the silica particles, and coating of the silica particles thereby, increases the level of charge imparted to the particles as a result of friction on shaking the powder.

10 adult German cockroaches (*Blattella germanica*) were treated with the prepared dry powder mixture using a fine camel hair brush to place a fine uniform coating over the whole of the dorsal surface of the insect. For each group of 10 insects that was treated with the mixture, a similar group was treated in exactly the same way with a mixture prepared in the proportions of silica, 90g, and sulfluramid, log. Each test was replicated four times with each group of 10 insects.

The treated cockroaches were kept in individual containers in a chamber at 25°C and 30-40% relative humidity. The mortality of the insects was then recorded in terms of the number of insects out of 10 that showed no movement of any part of the body for 24 hours.

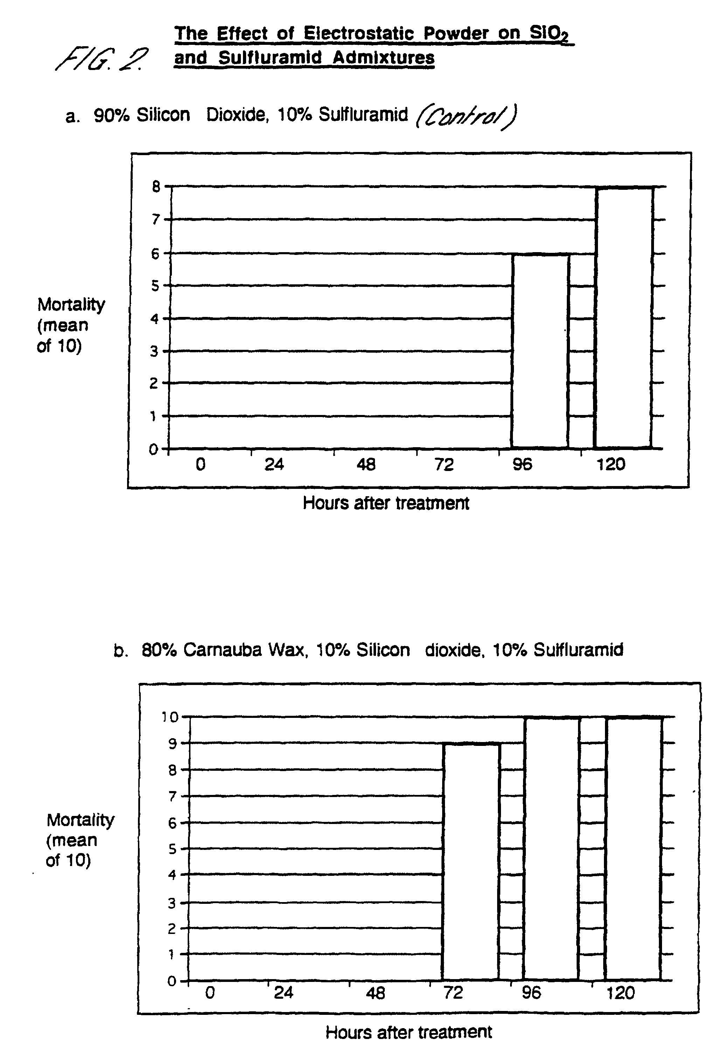

Figure 2 shows the mean mortality of cockroaches from the four replicate tests. The results show that the insecticidal effect is significantly greater when the electrostatic properties of the carrier particles are increased by association with the wax particles. This is demonstrated by mortality occurring after 72 hours with the wax coated silica particles, rather than after than 96 hours for particles without the wax coating.

### EXAMPLE 2

The procedure of Example 1 was repeated using chitosan (Seacure CL210, Pronova Biopolymer) as the carrier for the sulfluramid.

A control experiment was carried out substantially in the manner as described in Example 1 using a mixture of chitosan and sulfluramid.

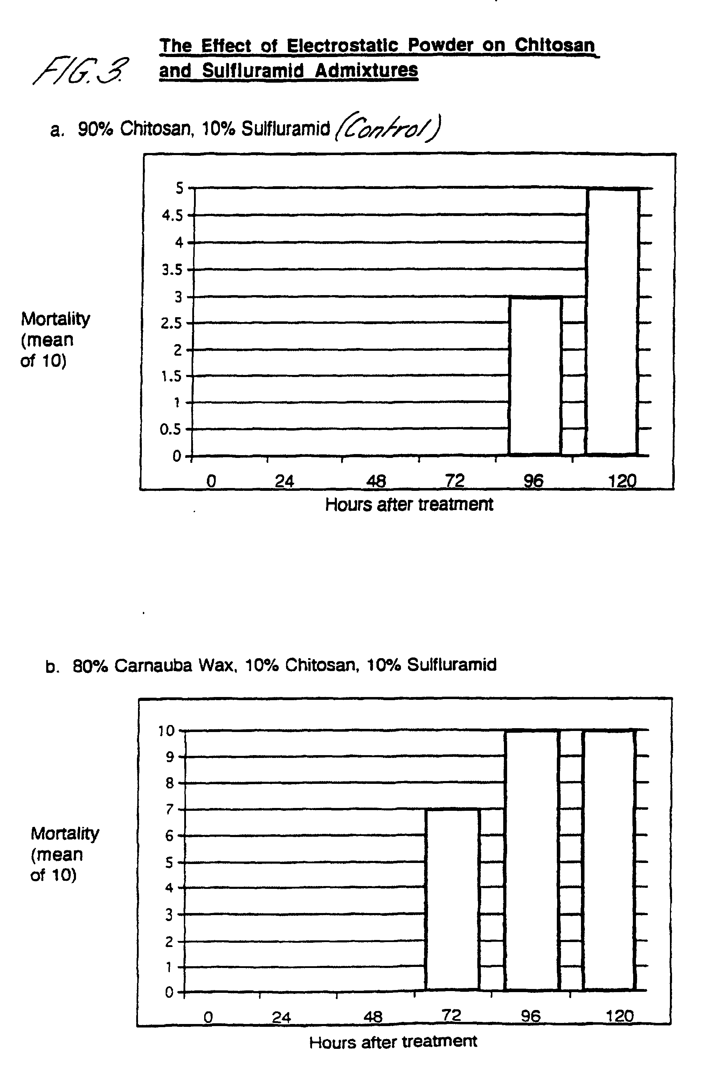

The results of the experiments are given in Figure 3, from which it can be seen that the insecticidal effect of the sulfluramid is increased when the carrier particles are coated with lipid.

### EXAMPLE 3

The procedures of Examples 1 and 2 were repeated using adult American cockroaches *(Periplaneta americana).* Substantially the same results were obtained.

## Claims

1. A pesticidal composition in particulate form which comprises composite particles having an average particle size in the range of from 1 to 100/*µ* m, each particle comprising a core of an inert substrate having a first pesticide associated therewith, a coating of an electrically resistive material around the said core and a second pesticide adhered to the coating of the electrically resistive material, the particles carrying an electrostatic charge.

2. A composition as claimed in claim 1 wherein the inert substrate comprises silica, magnesium silicate, diatomaceous earth, cellulose or a natural or synthetic polymer.

3. A composition as claimed in claim 1 or claim 2 wherein the particles have an average particle size in the range of from 20 to 60µm.

4. A composition as claimed in any one of the preceding claims wherein the first pesticide is an insecticide, fungicide, acaricide, insect growth regulator or chemosterilant.

5. A composition as claimed in any one of claims 1 to 4 wherein the first pesticide is a bacterium, virus or fungus.

6. A composition as claimed in any one of claims 1 to 4 wherein the first pesticide is a behaviour modifying chemical.

7. A composition as claimed in any one of the preceding claims wherein the pesticide comprises at least 0.1% by weight of the cores of the particles.

8. A composition as claimed in any one of the preceding claims wherein the coating material comprises from 5 to 25% by volume of the comprises particles.

9. A composition as claimed in any one of the preceding claims wherein the electrically resistive coating comprises a wax, a lipid, a natural or synthetic resin or a natural synthetic polymer.

10. A composition as claimed in any one of the preceding claims wherein the second pesticide comprises fungal spores.

## Patentansprüche

1. Pestizidzusammensetzung in Teilchenform, die Verbundteilchen einer mittleren Teilchengröße in einem Bereich von 1 bis 100 µm aufweist, wobei jedes Teilchen einen Kern aus einem inerten Substrat, das mit einem ersten Pestizid verbunden ist, und einen Überzug aus einem einen elektrischen Widerstand darstellenden Material um den Kern herum und einem zweiten Pestizid, das an dem Überzug des einen elektrischen Widerstand darstellenden Materials haftet, umfasst, wobei die Teilchen eine elektrostatische Ladung tragen.

2. Zusammensetzung nach Anspruch 1, wobei die inerte Substanz Siliciumdioxid, Magnesiumsilicat, Diatomeenerde, Cellulose oder ein natürliches oder synthetisches Polymer umfasst.

3. Zusammensetzung nach Anspruch 1 oder Anspruch 2, wobei die Teilchen eine mittlere Teilchengröße in einem Bereich von 20 bis 60 µm aufweisen.

4. Zusammensetzung nach einem der vorhergehenden Ansprüche, wobei das erste Pestizid ein Insektizid, Fungizid, Acarizid, Insektenwachstumregulator oder chemisches Sterilisationsmittel ist.

5. Zusammensetzung nach einem der Ansprüche 1 bis 4, wobei das erste Pestizid ein Bakterium, Virus oder Pilz ist.

6. Zusammensetzung nach einem der Ansprüche 1 bis 4, wobei das erste Pestizid eine das Verhalten modifizierende Chemikalie ist.

7. Zusammensetzung nach einem der vorhergehenden Ansprüche, wobei das Pestizid mindestens 0,1 Gew.-% der Kerne der Teilchen ausmacht.

8. Zusammensetzung nach einem der vorhergehenden Ansprüche, wobei das Beschichtungsmaterial 5 bis 25 Vol.-% der Teilchen ausmacht.

9. Zusammensetzung nach einem der vorhergehenden Ansprüche, wobei der einen elektrischen Widerstand darstellende Überzug ein Wachs, ein Lipid, ein natürliches oder synthetisches Harz oder ein natürliches synthetisches Polymer umfasst.

10. Zusammensetzung nach einem der vorhergehenden Ansprüche, wobei das zweite Pestizid Pilzsporen umfasst.

## Revendications

1. Composition pesticide sous forme de particules, qui comprend des particules composites ayant un diamètre moyen de particule compris dans l'intervalle de 1 à 100 µm, chaque particule comprenant un noyau constitué d'un substrat inerte auquel est associé un premier pesticide, un revêtement constitué d'une matière douée de résistivité électrique autour dudit noyau et un second pesticide adhérant au revêtement de la matière douée de résistivité électrique, les particules portant une charge électrostatique.

2. Composition suivant la revendication 1, dans laquelle le substrat inerte comprend la silice, le silicate de magnésium, la terre de diatomées, la cellulose ou un polymère naturel ou synthétique.

3. Composition suivant la revendication 1 ou la revendication 2, dans laquelle les particules ont un diamètre moyen de particule compris dans l'intervalle de 20 à 60 µm.

4. Composition suivant l'une quelconque des revendications précédentes, dans laquelle le premier pesticide est un insecticide, un fongicide, un acaricide, un régulateur de croissance d'insecte ou un chimio-stérilisant.

5. Composition suivant l'une quelconque des revendications 1 à 4, dans laquelle le premier pesticide est une bactérie, un virus ou un champignon.

6. Composition suivant l'une quelconque des revendications 1 à 4, dans laquelle le premier pesticide est un agent chimique modificateur de comportement.

7. Composition suivant l'une quelconque des revendications précédentes, dans laquelle le pesticide représente au moins 0,1 % en poids des noyaux des particules.

8. Composition suivant l'une quelconque des revendications précédentes, dans laquelle la matière de revêtement représente 5 à 25 % en volume des particules.

9. Composition suivant l'une quelconque des revendications précédentes, dans laquelle le revêtement doué de résistivité électrique comprend une cire, un lipide, une résine naturelle ou synthétique ou un polymère naturel ou synthétique.

10. Composition suivant l'une quelconque des revendications précédentes, dans laquelle le second pesticide comprend des spores de champignon.
